# EUROPEAN PATENT APPLICATION

(11) **EP 1 427 234 A1**
(43) Date of publication of application: **09.06.2004**
(21) Application number: 02292966.5
(22) Date of filing: 02.12.2002
(51) Int. Cl.: H04Q 7/36

(54) **Method of generating cell neighbour lists in a cellular telecommunication system**

(71) Applicant: Mitsubishi Electric Information Technology Centre Europe B.V., 1119 NS Schiphol Rijk (NL); MITSUBISHI DENKI KABUSHIKI KAISHA, Tokyo 100-8310 (JP)
(72) Inventor: Voyer, Nicolas, Mitsubishi Electric Ite, 35700 Rennes (FR)
(74) Representative: Maillet, Alain

(57) **Abstract**

The invention relates to a method of generating neighbour lists of cells NBL(Ci), said method including:
. a mapping step MPS for defining areas on a best-server map BSMP, each area corresponding to a specific cell Ci,
. a subdivision step SDS for creating a grid composed of elementary surfaces ES,
. a scanning step SCS(ES) for identifying, for each elementary surface ES of each specific cell Ci, radio base stations BSi,k which potentially offer suitable communication qualities, and
. a compilation step CMPS(BSi,k) for storing in the neighbour list NBL(Ci) identities of a set of cells identified during the scanning step SCS(ES).

The invention provides accurate neighbour lists without requiring actual measurements of interference levels in the field, by performing a study of expected communication conditions on the whole area over which a telecommunication is to be deployed.

## Description

The present invention relates to a method of generating neighbour lists of cells in a cellular telecommunication system including a plurality of radio base stations and another plurality of mobile transceivers, each cell including a radio base station and being provided with a single neighbour list of cells.

A cell may be defined as a set of geographical locations to which a given radio base station provides a best communication quality. Cellular telecommunication systems of the third generation, commonly referred to as 3G systems, are defined by standard specifications, among which the 3GPP TS 25.331 specification, which sets forth that a neighbour list should be assigned to any given cell included in a 3G system. Such a list is intended to include neighbour cells not necessarily belonging to an active set of cells corresponding to radio base stations with wich a mobile transceiver located within said given cell is in a soft handover configuration, which neighbour cells nevertheless could potentially provide suitable communication quality to said mobile transceiver.

The 3GPP TS 25.331 standard specification does not, however, describe the actual process to be used for generating such neighbour lists. Various documents describe methods intended for this purpose, among which European Patent Application EP 1 189 468 A1. This patent application describes a method according to which, for a mobile transceiver located at a given place, various interference levels which may each adversely affect a communication between said mobile transceiver and a given radio base station are computed. Each interference level is then compared with a signal level of the corresponding communication in order to determine a probability value for each radio base station to successfully establish a communication with a mobile transceiver located at said given place. Cells including those base stations which will have scored the highest probability values will be elligible for the neighbour list of the cell whose coverage area encloses said given place.

The known method involves a gathering of data representative of numerous interference levels for a very high number of geographic locations, since a 3G telecommunication system typically includes, spread over tens of thousands of square kilometers, thousands of radio base stations and hundreds of thousands of mobile transceivers which are all bound to interfere with each other to a various degree depending on their relative locations and configurations.

Such a gathering of data requires considerable resources for actually performing related measurements in the field, for example by means of so-called drive tests during which human testers wander all over a landscape over which the telecommunication system is deployed and measure said interference levels.

Implementation of the known method moreover requires considerable processing resources for compiling all interference levels and probability values, as well as a huge memory space for storing all data needed for such a compilation.

The amount of data to be measured and compiled according to the known method may be reduced by limiting the above-described analysis to a reduced number of separate locations and using interpolation techniques for extending the results of such an analysis to the whole system, but such an approach is likely to miss isolated phenomena which may locally affect some communications and will thus not be very reliable.

Furthermore, this known method may of course only be used in telecommunication systems which have already been deployed, and cannot be used for simulating such a system before actual deployment, in the purpose of optimizing said deployment.

Another method for generating a neighbour list of a specific cell may be based on a geographical analysis, i.e. by selecting only those cells which include radio base stations located in the vicinity of the radio base station corresponding to said specific cell.

Such a geographical method, though easy to implement, lacks in accuracy since it only takes into account the general configuration of all radio base stations. Indeed, each cell may locally include pockets within which a radio base station belonging to a different cell may provide a better communication quality, which pockets will be overlooked by such a general geographical method.

The present invention aims at solving the above-mentioned problems, by providing a method of accurately generating neighbour lists in a cellular telecommunication system, which method does not require actual measurements of interference levels in the field, said method being able to perform a study of expected communication conditions on the whole area over which said telecommunication is to be deployed.

To this end, according to a software-oriented aspect of the invention, a method as described in the opening paragraph includes :
. a mapping step for defining areas on a best-server map depicting said telecommunication system, each area corresponding to a specific cell within which a mobile transceiver will be offered a highest communication quality by a radio base station associated to said specific cell,
. a subdivision step of said best-server map for creating a grid composed of elementary surfaces,
. a scanning step for identifying, for each elementary surface of said specific cell, at least one radio base station which potentially offers a suitable communication quality to a mobile transceiver located within said elementary surface, and
. a compilation step for storing in the neighbour list related to each specific cell identities of a set of cells which include radio base stations which will have been identified during the course of the scanning of the area corresponding to said specific cell.

Since the method according to the invention only requires a best-server map and data pertaining thereto for its implementation, said method may be used before actual deployment of the telecommunication system described by said map in the purpose of optimizing various parmeters of said deployment, such as locations or transmitting powers of radio base stations included in said telecommunication system.

According to the invention, only one (though possibly more than one as will be explained in further detail hereinafter) radio base station offering a suitable communication quality has to be identified for each given elementary surface of the best-server map. Such an identification does not require a complex computation of interference parameters, nor a comparison between several communication qualities offered in said given elementary surface by different radio base stations, which enables to saves both processing power and memory space.

The identities of all radio base stations which will have been regarded as offering suitable communication quality, and the number of times they will have been identified as such during the scanning of an area corresponding to a specific cell may thus be easily stored. The set of cells which will be selected for constituting the neighbour list of said specific cell may then be formed by the cells including those base stations which will have been identified the highest number of times during said scanning, which is easy to determine.

Various means may be used for keeping score of the radio base stations identified during the scanning step. According to an advantageous embodiment of the invention, at least one counter is associated to each given cell, said counter being intended to be incremented during the course of the scanning step of a specific cell each time the radio base station included in said given cell is identified as potentially offering a suitable communication quality to a mobile transceiver located within an elementary surface included in said specific cell.

According to a particularly advantageous embodiment of the invention, an incrementation of a counter associated to a given cell in the course of the scanning step of a specific cell will trigger an equivalent incrementation of another counter which will be associated to said specific cell in the course of the scanning step of said given cell.

This embodiment of the invention enables a symmetrical loading of counters sharing together a neighbourship link, and will enhance the relevance of the neighbour lists thus generated.

Various means may be used for selecting those cells which should be listed in the neighbour list of a specific cell.

According to a particular embodiment of the invention, those cells whose identities are to be stored in the neighbour list of a specific cell during the course of the compilation step are those cells to which are associated a predetermined number of counters which will exhibit highest values at the end of the scanning step of all elementary surfaces of said specific cell.

According to another particular embodiment of the invention, those cells whose identities are to be stored in the neighbour list of a specific cell during the course of the compilation step are those cells to which are associated counters which will exhibit values exceeding a predetermined threshold value at the end of the scanning step of all elementary surfaces of said specific cell.

According to yet another particular embodiment of the invention, in which each value stored in a counter at the end of a scanning step is to be divided by a total number of counters which will have been incremented during the course of said scanning step, in order to produce a relative value associated to each counter, those cells whose identities are to be stored in the neighbour list of a specific cell during the course of the compilation step then being those cells to which arc associated relative values which exceed a predetermined threshold ratio.

As stated hereinbefore, more than one radio base station may be regarded as potentially offering a suitable communication quality to a mobile transceiver located within a given elementary surface. In another particular embodiment of the invention, the radio base stations appearing in an active set which is to be transmitted to the mobile transceiver when said mobile transceiver is located within said elementary surface will be regarded as potentially offering a suitable communication quality.

This embodiment of the invention advantageously makes use of information related to each elementary surface, which information may be generated by a radio planning tool for purposes of planning a management of handover processes, and thus only requires, in such a case, a small additionnal amount of processing power in order to execute the scanning step.

Information comprised in such an active set will identify cells corresponding to base stations with which a mobile transceiver belonging to any given cell will be in a soft handover configuration, according to the 3GPP TS 25.331 specification.

In another embodiment of the invention, the scanning step includes substeps defined as follows:
. a window generating substep for creating a gliding window intended to cover simultaneously at least two distinct elementary surfaces which are in contact with each other,
. a window analysing substep for determining if different radio base stations included in respective different cells offer highest communication qualities in the distinct elementary surfaces covered by said window, and
. an incrementing substep for incrementing the values stored in each counter associated with one of said different cells if said different radio base stations offer highest communication qualities in the distinct elementary surfaces covered by said window,
which substeps are intended to be executed iteratively as long as at least one elementary surface of the specific cell for which a neighbour list is to be generated has not been covered by the gliding window.

This embodiment of the invention is advantageous in that it enables a loading of the counters, and thus a generation of statistical information which will easily be processed as explained hereinbefore, which loading will be executed on the sole basis of data provided by the best-server map, i.e. the identity of each base station which provides the highest communication quality for each elementary surface of said map.

According to another embodiment of the invention, each counter intended to be incremented in the course of the incrementing substep is to be incremented by a weighted value, which weighted value depends on a number of elementary surfaces which form together a solid area within which a same radio base station offers the highest communication quality, said solid area including at least one of said distinct elementary surfaces covered by the gliding window.

This preferred embodiment of the invention enables to treat differently isolated elementary surfaces, for which a given cell would provide the highest communication quality, and groups of such surfaces, which grouped elementary surfaces are more significant than the afore-mentioned isolated ones and should thus be given a greater weight in anticipation of the compilation step.

The above-described method may for example advantageously include a weighting substep for identifying, during the scanning substep, solid areas within which a same radio base station will offer a highest communication quality, and for counting a number of elementary surfaces included in each area thus identified, said number constituting said weighted value.

The characteristics of the invention mentioned above, as well as others, will emerge more clearly from a reading of the following description given in relation to the accompanying figures, amongst which:
Fig.1 is a schematic which represents a simplified best-server map to be used in the course of the execution of a mapping step included in a method according to the invention,
Fig.2 is a flowchart which depicts successive steps to be executed in a method according to the invention,
Fig.3 is a diagram which depicts contents of counters used in an advantageous embodiment of the invention,
Fig.4 is a schematic which represents an elementary surface scanned in the course of the execution of a scanning step included in a method according to a particular embodiment of the invention,
Fig.5 is a schematic which represents elementary surfaces scanned in the course of the execution of a scanning step included in a method according to another particular embodiment the invention, and
Fig.6 is a schematic which represents elementary surfaces scanned in the course of the execution of a scanning step included in a method according to a preferred embodiment the invention.

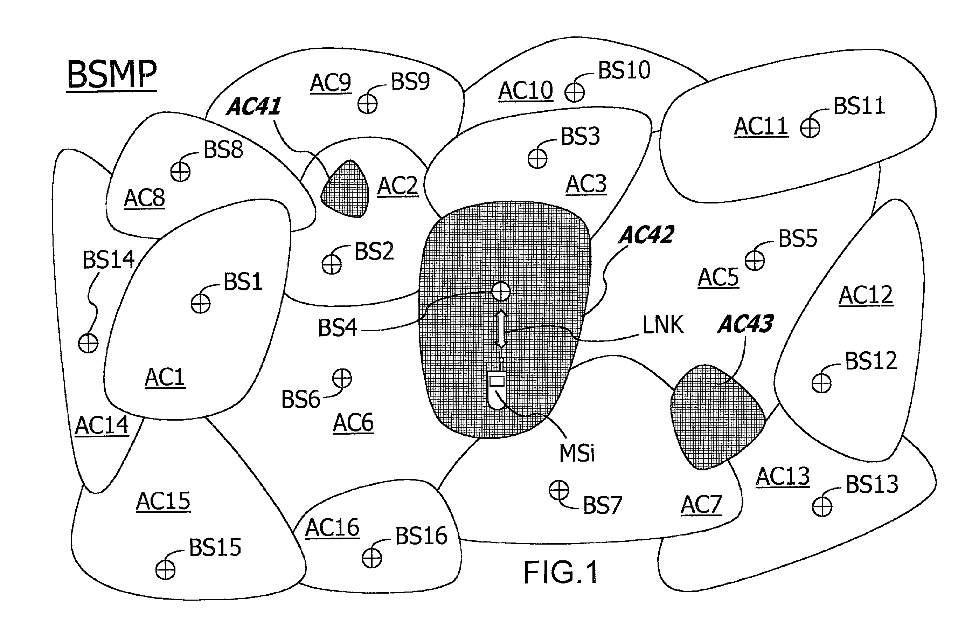

Fig.1 is a very schematic diagram which represents a best-server map BSMP of a 3G telecommunication system, which map has been generated by executing a mapping step included in the method according to the invention, which mapping step is intended to define areas on said best-server map BSMP, each area corresponding to a specific cell within which a mobile transceiver will be offered a highest communication quality by a radio base station associated to said specific cell. This best-server map BSMP thus exhibits coverage areas AC1...AC16 of cells including radio base stations BS1...BS16, which means that in the coverage area ACk of a given cell, the radio base station BSk included in said cell will offer the best possible communication quality to a mobile transceiver located within said coverage area ACk. This communication quality may be assessed by analysing parameters such as Coupling Loss (CL) values, Received Signal Code Power (RSCP), Common Pilot CHannel (CPCH) strength, Energy Chip/Noise (EC/NO), etc.

In this example, a particular cell including a radio base station BS4 is singled out as exhibiting a coverage area composed of three separate coverage areas AC41, AC42 and AC 43. This may sometimes happen due to landscape features which may cause a given coverage area, like in this example areas AC2, AC5 or AC7, to include one or several pockets where a base station like base station BS4, which is not the base station nominally associated with said given area like in this example base stations BS2, BS5 and BS7, will provide the best communication quality to a mobile transceiver located within such a pocket.

In the situation depicted here, a communication is established between a mobile transceiver MSi and the radio base station BS4 through a radio link LNK. This communication will feature a quality which will be adversely affected by communications going on in the same or other cells, which quality, or loss thereof, may be quantified by using an interference parameter like a signal-to-noise or a carrier-to-interference ratio.

According to the 3GPP TS 25.331 specification, a neighbour list must be generated for each cell.

The neighbour list of a specific cell may be generated by taking into account only geographical features of the best server map, i.e. by selecting only those cells which have a coverage area which is adjacent to that of said specific cell. In this example, the neighbour list of the cell including the base station BS4 would thus comprise the cells which include radio base stations BS2, BS3, BS5, BS6, BS7 and BS 13, the latter being included in this neighbour cell list because of the AC43 pocket.

Such a geographical method, though easy to implement, lacks in accuracy since it only takes into account the general configuration of all cells. Indeed, each cell may locally include pockets far smaller, for eaxample, than pocket areas AC41 or AC43, within which a radio base station belonging to a different cell may provide a better communication quality, which pockets will be overlooked by the above-described general geographical method.

The invention enables to take such small pockets into account, and is thus far more accurate than the geographical method described above, without requiring huge additionnal processing power for this purpose.

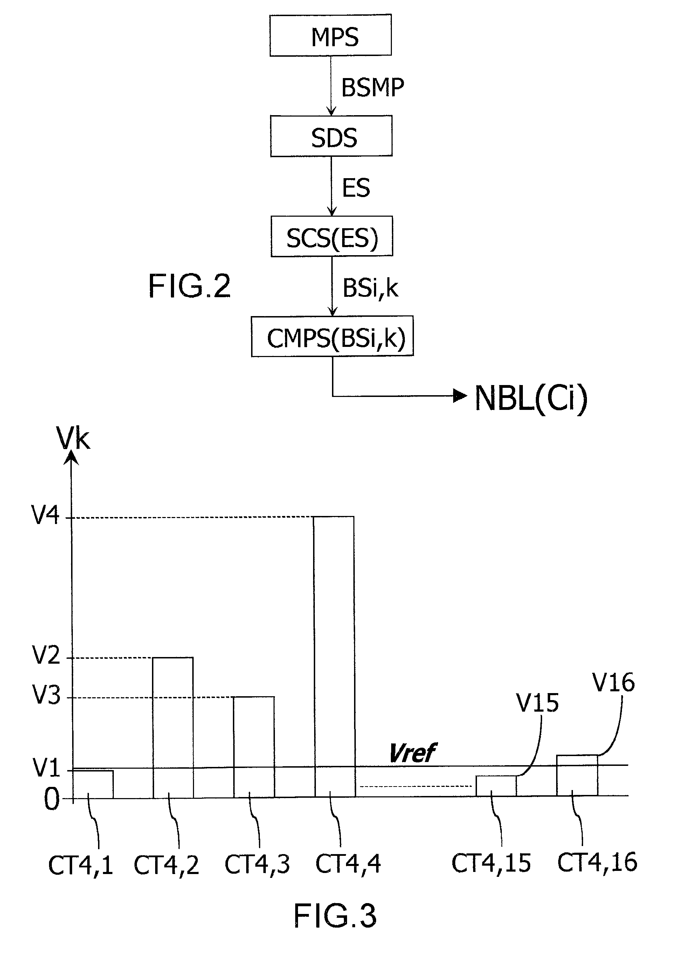

Fig.2 is a flow chart showing such a method of generating a neighbour list of cells for each specific cell Ci included in a cellular telecommunication system. According to the inbvention, this method includes, in addition to a mapping step MPS intended to generate a best-server map BSMP as has been described above, the following steps:
. a subdivision step SDS for creating a grid like that shown on coverage areas AC41, AC42 and AC43 of the previous figure, composed of elementary surfaces ES,
. a scanning step SCS(ES) for identifying, for each elementary surface ES of said specific cell Ci, at least one radio base station BSi,k which potentially offers the best communication quality to a mobile transceiver located within said elementary surface ES,
. a compilation step CMPS(BSi,k) for storing in the neighbour list related to said given cell identities of a set of cells which include radio base stations BSi,k which will have been identified during the course of the scanning of the area corresponding to said specific cell Ci.

According to the invention, only one (though possibly more than one) radio base station offering a suitable communication quality has to be identified for each given elementary surface ES of the best-server map. Such an identification does not require a complex computation of interference parameters, nor a comparison between several communication qualities offered in said given elementary surface ES by different radio base stations, which enables to save both processing power and memory space.

The identities of all radio base stations which will have been regarded as offering suitable communication quality, and the number of times they will have been identified as such during the scanning of an area corresponding to a specific cell will easily be stored thanks to the invention. The set of cells which will be selected for constituting the neighbour list of said specific cell may then be formed by the cells including those base stations which will have been identified the highest number of times during said scanning, which is easy to determine.

Fig.3 is a diagram which shows contents of counters CT4,1; CT4,2; CT4,3; CT4,4;...CT4,15; CT4,16 respectively associated to the cells including the radio base stations BS1, BS2, BS3, BS4...BS15, BS16 depicted in Fig.1, each counter having been incremented during the course of the scanning step each time its associated radio base station has been identified as potentially offering a suitable communication quality for an elementary surface included in a cell C4 formed by the gridded areas AC41, AC42 and AC43 shown in Fig.1. As foreseeable, the counter CT4,4 associated to the radio base station BS4 associated to the specific cell C4 whose coverage area comprises said gridded araeas AC41, AC42 and AC43 exhibits a highest value V4, while other counters associated with cells having areas AC2, AC3 geographically adjacent to said areas AC41, AC42 and AC43 also exhibit significant values V2 and V3.

Since the purpose of the method according to the invention is here to establish a list of cells neighbouring this specific cell C4 whose coverage area comprises said gridded areas AC41, AC42 and AC43, the counter CT4,4 will preferrably be discarded during the execution of the compilation step related to said specific cell C4.

According to a particular embodiment of the invention, those cells whose identities are to be stored in the neighbour list of the cell enclosing radio base station BS4 will be those cells to which are associated a predetermined number P of counters other than counter CT4,4 which will exhibit highest values at the end of the scanning step of all elementary surfaces of said specific cell. In the highly simplified example described here, if P were chosen equal to two and if all other counters not shown in the figure were exhibiting values lower than V2 and V3, the cells forming the neighbour list of the cell associated to radio base station BS4 would then be the cells associated to radio base stations BS2 and BS3.

According to another particular embodiment of the invention, those cells whose identities are to be stored in the neighbour list of the cell enclosing radio base station BS4 will be those cells to which are associated counters other than counter CT4,4 which will exhibit values exceeding a predetermined threshold value Vref at the end of the scanning step of all elementary surfaces of said specific cell. In the highly simplified example described here, if all other counters not shown in the figure were exhibiting values lower than the predetermined threshold value Vref, the cells forming the neighbour list of the cell associated to radio base station BS4 would then be the cells associated to radio base stations BS2, BS3 and BS16.

According to yet another particular embodiment of the invention, each value Vk stored in a counter CTi,k at the end of a scanning step is to be divided by a total number N of counters which will have been incremented during the course of said scanning step, in order to produce a relative value Vk/N associated to each counter, those cells whose identities are to be stored in the neighbour list of a specific cell during the course of the compilation step then being those cells to which are associated relative values which exceed a predetermined threshold ratio.

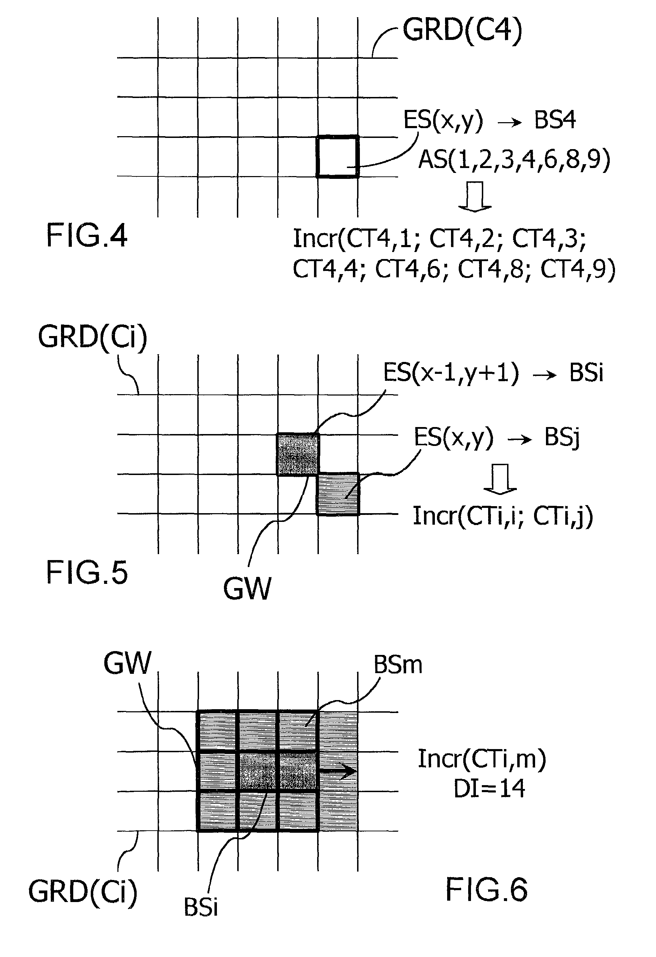

Fig.4 is a schematic which shows how radio base stations offering suitable communication qualities may be identified in the course of a scanning step according to a particular embodiment of the invention, in which embodiment active sets generated by a radio network controller for handover management purposes are taken into account. This Figure is a detailed view of a part of a grid GRD(C4) covering, among others, the pocket area AC41 associated to radio base station BS4 described in Fig.1. This grid GRD(C4) defines elementary surfaces to be scanned in the course of the execution of the scanning step, among which an elementary surface ES(x,y) located at respective horizontal and vertical coordinates x and y. In the example depicted here, an active set AS(1,2,3,4,6,8,9) used for transmitting data to a mobile transceiver located within said elementary surface ES(x,y) includes identities of cells including radio base stations BS1, BS2, BS3, BS6, BS8 and BS9, so that the respective counters CT4,1; CT4,2; CT4,3; CT4,4; CT4,6; CT4,8 and CT4,9 will be incremented, for example by a single unit, as a result of the scanning of this elementary surface ES(x,y). When a next elementary surface, for example ES(x+1,y), will be scanned, the same or other counters will be incremented depending on the contents of the active set relevant to this next elementary surface ES(x+1,y), and so on, until all elementary surfaces included in the area corresponding to this cell C4 will have been scanned, at which point the various counters will exhibit various respective values as shown in Fig.3.

Fig.5 is a schematic which shows how radio base stations offering suitable communication qualities may be identified in the course of a scanning step of a specific cell Ci according to another particular embodiment of the invention, in which embodiment the scanning step includes substeps defined as follows:
. a window generating substep for creating a gliding window GW intended to cover simultaneously at least two distinct elementary surfaces ES(x,y) and ES(x-1,y+1) which are in contact with each other,
. a window analysing substep for determining if different radio base stations BSi and BSj included in respective different cells offer highest communication qualities in the distinct elementary surfaces ES(x-1,y+1) and ES(x,y) covered by said window GW, and
. an incrementing substep Incr(CTi,i;CTi,j) for incrementing the values stored in each counter CTi,i or CTi,j associated with one of said different cells if said different radio base stations BSi and BSj offer highest communication qualities in the distinct elementary surfaces ES(x-1,y+1) and ES(x,y) covered by said window GW,
   which substeps are intended to be executed iteratively as long as at least one elementary surface ES of the specific cell Ci for which a neighbour list is to be generated has not been covered by the gliding window GW.

In this particular embodiment of the invention, counters associated to different elementary surfaces are simultaneously incremented when it appears that radio base stations associated to said counters each provide a highest communication quality for said different elementary surfaces. The whole grid GRD(Ci) covering the specific cell Ci is thus scanned, which results in a picture as shown in Fig.3, in which various counters CTi,k exhibit various respective values Vk. This embodiment thus only uses data already generated for creating the best-server map and does not require a complex computing of interference parameters like signal-to-noise or carrier-to-interference ratios.

Fig.6 is a schematic which shows a preferred embodiment of the invention, according to which a counter CTi,m intended to be incremented in the course of the incrementing substep is to be incremented by a weighted value, which weighted value depends on a number of elementary surfaces which form together a solid area within which a same radio base station offers the highest communication quality, said solid area including at least one of said distinct elementary surfaces covered by the gliding window GW.

In the example depicted here, the gliding window GW is a square intended to simultaneously cover a block of nine elementary surfaces defined by a grid GRD(Ci). A number N=2 of these elementary surfaces form together a solid area within which radio base station BSi included in the specific cell Ci covered by said grid GRD(Ci) offers the highest communication quality, the gliding window GW otherwise covering a number M=7 of elementary surfaces within which another, neighbouring radio base station BSm offers the highest communication quality. In this case, the counter CTi,m associated with radio base station BSm will be incremented M times by a weighted value equal to N, i.e. by a total value DI=14 during the window analysing substep corresponding to the present position of the gliding window GW, and again M times by a weighted value equal to N during the window analysing substep corresponding to the next position of the gliding window GW, indicated by an arrow in this drawing.

Such an increment-weighting technique enables to treat differently isolated elementary surfaces, for which a given cell would provide the highest communication quality, and groups of such surfaces, which grouped elementary surfaces are more significant than the afore-mentioned isolated ones and should thus be given a greater weight in anticipation of the compilation step.

Indeed, without this increment-weighting technique, a single isolated elementary surface located in the center of gliding window GW would generate an increment of 8 of the counter, in this example CTI,m, associated to its best-serving radio-base station BSm while two adjacent elementary surfaces like those depicted here would only generate an increment of 14 of the counter CTi,m, whereas they will generate a total increment of 28 thanks to the above-described weighting technique, which shows how said technique enables to increase the significance of multiple elementary surfaces forming a single block within which a single radio base station provides the highest communication quality.

## Claims

1. A method of generating neighbour lists of cells in a cellular telecommunication system including a plurality of radio base stations and another plurality of mobile transceivers, each cell including a radio base station and being provided with a single neighbour list of cells, said method including:
. a mapping step for defining areas on a best-server map depicting said telecommunication system, each area corresponding to a specific cell within which a mobile transceiver will be offered a highest communication quality by a radio base station associated to said specific cell,
. a subdivision step of said best-server map for creating a grid composed of elementary surfaces,
. a scanning step for identifying, for each elementary surface of each specific cell, at least one radio base station which potentially offers a suitable communication quality to a mobile transceiver located within said elementary surface, and
. a compilation step for storing in the neighbour list related to each specific cell identities of a set of cells which include radio base stations which will have been identified during the course of the scanning of the area corresponding to said specific cell.

2. A method as claimed in claim 1, in which, at least one counter being associated to each given cell, said counter is to be incremented during the course of the scanning step of a specific cell each time the radio base station included in said given cell is identified as potentially offering a suitable communication quality to a mobile transceiver located within an elementary surface included in said specific cell.

3. A method as claimed in claim 2, in which, an incrementation of a counter associated to a given cell in the course of the scanning step of a specific cell will trigger an equivalent incrementation of another counter which will be associated to said specific cell in the course of the scanning step of said given cell.

4. A method as claimed in claims 2 or 3, in which those cells whose identities are to be stored in the neighbour list of a specific cell during the course of the compilation step are those cells to which are associated a predetermined number of counters which will exhibit highest values at the end of the scanning step of all elementary surfaces of said specific cell.

5. A method as claimed in claims 2 or 3, in which those cells whose identities are to be stored in the neighbour list of a specific cell during the course of the compilation step are those cells to which are associated counters which will exhibit values exceeding a predetermined threshold value at the end of the scanning step of all elementary surfaces of said specific cell.

6. A method as claimed in claims 2 or 3, in which each value stored in a counter at the end of a scanning step is to be divided by a total number of counters which will have been incremented during the course of said scanning step, in order to produce a relative value associated to each counter, those cells whose identities are to be stored in the neighbour list of a specific cell during the course of the compilation step then being those cells to which are associated relative values which exceed a predetermined threshold ratio.

7. A method as claimed in one of claims 1 to 6, in which a radio base station is regarded as potentially offering a suitable communication quality to a mobile transceiver located within a given elementary surface if said radio base station appears in an active set which is to be transmitted to the mobile transceiver when said mobile transceiver is located within said elementary surface.

8. A method as claimed in one of claims 2 to 6, in which the scanning step includes substeps defined as follows:
. a window generating substep for creating a gliding window intended to cover simultaneously at least two distinct elementary surfaces which are in contact with each other,
. a window analysing substep for determining if different radio base stations included in respective different cells offer highest communication qualities in the distinct elementary surfaces covered by said window, and
. an incrementing substep for incrementing the values stored in each counter associated with one of said different cells if said different radio base stations offer highest communication qualities in the distinct elementary surfaces covered by said window,
which substeps are intended to be executed iteratively as long as at least one elementary surface of the specific cell for which a neighbour list is to be generated has not been covered by the gliding window.

9. A method according to claim 8, in which each counter intended to be incremented in the course of the incrementing substep is to be incremented by a weighted value, which weighted value depends on a number of elementary surfaces which form together a solid area within which a same radio base station offers the highest communication quality, said solid area including at least one of said distinct elementary surfaces covered by the gliding window.

10. A method according to claim 9, further including a weighting substep for identifying, during the scanning substep, solid areas within which a same radio base station will offer a highest communication quality, and for counting a number of elementary surfaces included in each area thus identified, said number constituting said weighted value.
